# EUROPEAN PATENT APPLICATION

(11) **EP 3 616 941 A1**
(43) Date of publication of application: **04.03.2020**
(21) Application number: 18790979.1
(22) Date of filing: 06.02.2018
(51) Int. Cl.: B60C 5/00

(54) **PNEUMATIC TIRE**

(30) Priority: 25.04.2017 JP 2017086147
(71) Applicant: Bridgestone Corporation, Tokyo 104-8340 (JP)
(72) Inventor: HASEGAWA, Keiichi, Tokyo 104-8340 (JP); MATSUMOTO, Yoshifumi, Tokyo 104-8340 (JP); KOUNO, Yoshihide, Tokyo 104-8340 (JP)
(74) Representative: Oxley, Robin John George
(86) International application number: PCT/JP2018/004047
(87) International publication number: WO 2018/198471

(57) **Abstract**

A pneumatic tire has: a noise suppressing member that has a mounting portion that is plate-shaped and that is fixed to a tire inner surface, a convex portion that is plate-shaped and is curved convexly from the mounting portion toward an inner side in a tire radial direction, and a bent portion that is formed at a boundary between the mounting portion and the convex portion, wherein a plate thickness of the bent portion and a vicinity thereof is thicker than a plate thickness of another region of the noise suppressing member.

## Description

### Technical Field

The present disclosure relates to a pneumatic tire.

### Background Art

Japanese Patent Application Laid-Open (JP-A) No. 2016-34779 discloses a structure in which, in order to reduce cavity resonance noise of a tire, a plate-shaped member is mounted to a tread portion inner surface at at least two mounting portions that are disposed with an interval therebetween in the tire circumferential direction. The plate-shaped member has a space between the plate-shaped member and the tread portion inner surface at between the adjoining two mounting portions, and is formed in a shape that is convex toward the tire radial direction inner side.

### SUMMARY OF INVENTION

### Technical Problem

In a case in which a plate-shaped noise suppressing member such as that of the above-described conventional example is used, if the tire radial direction height of the noise suppressing member is made to be large, it is easy to inhibit the generation of cavity resonance within the tire. However, it can be thought that, depending on the material of the noise suppressing member, it is easy for the noise suppressing member to deform in a direction of collapsing, due to generation of heat at the tire at the time of traveling and centrifugal force that is applied to the noise suppressing member.

In the above-described conventional example, it is disclosed that a reinforcing member, which is a body separate from the plate-shaped member, is mounted. However, if such a reinforcing member is provided separately, the increase in weight and the processing cost increase.

An object of the present disclosure is to suppress deformation of a noise suppressing member at the time of traveling, while suppressing an increase in the weight of the tire.

### Solution to Problem

A pneumatic tire relating to the present disclosure has: a noise suppressing member that has a mounting portion that is plate-shaped and that is fixed to a tire inner surface, a convex portion that is plate-shaped and is curved convexly from the mounting portion toward an inner side in a tire radial direction, and a bent portion that is formed at a boundary between the mounting portion and the convex portion, wherein a plate thickness of the bent portion and a vicinity thereof is thicker than a plate thickness of another region of the noise suppressing member.

### Advantageous Effects of Invention

In accordance with the pneumatic tire relating to the present disclosure, deformation of a noise suppressing member at the time of traveling can be suppressed, while an increase in the weight of the tire is suppressed.

### BRIEF DESCRIPTION OF DRAWINGS

Fig. 1 is a sectional perspective view showing a state in which a pneumatic tire relating to a present embodiment is cut in the tire axial direction.
Fig. 2 is an enlarged sectional view that is seen in the direction of arrow 2-2 of Fig. 1 and shows a noise suppressing member.
Fig. 3 is a cross-sectional view that corresponds to Fig. 2 and shows modified example 1 of the noise suppressing member.
Fig. 4 is a cross-sectional view that corresponds to Fig. 2 and shows modified example 2 of the noise suppressing member.

### DESCRIPTION OF EMBODIMENTS

An embodiment is described hereinafter on the basis of the drawings. In the drawings, the arrow C direction indicates the direction tangent to the tire circumferential direction, the arrow R direction indicates the tire radial direction outer side, and the arrow W direction indicates the tire width direction. The tire radial direction means the direction orthogonal to the tire rotational axis (not illustrated). The tire width direction means the direction parallel to the tire rotational axis. The tire width direction can also be called the tire axial direction.

The methods of measuring the dimensions of the respective portions are in accordance with the methods put forth in the 2017 YEAR BOOK issued by JATMA (Japan Automobile Tyre Manufacturer Association, Inc.). In cases in which TRA standards and ETRTO standards are applied in the regions of use or the regions of manufacturing, those respective standards are followed.

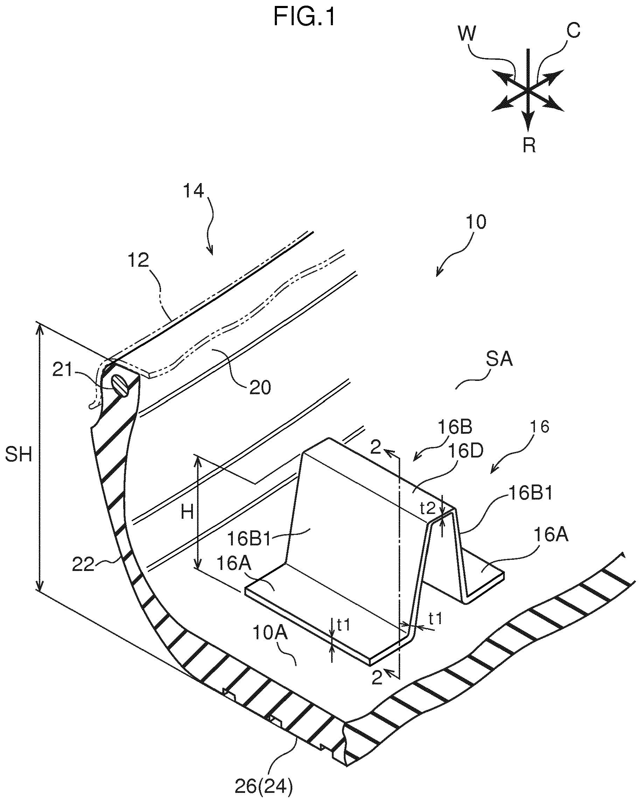

In Fig. 1, when a pneumatic tire 10 relating to the present embodiment is mounted to a rim 12, there becomes a tire/rim assembly 14. The pneumatic tire 10 has a pair of bead portions 20 that have bead cores 21, a pair of side portions 22 that respectively extend toward the tire radial direction outer side from the pair of bead portions 20, and a crown portion 24 that extends from the side portions 22 toward the tire width direction inner side. The insides of the respective portions, including the materials thereof, can be structured arbitrarily. At the pneumatic tire 10, the portion that is to 30% of a sectional height SH from the tire radial direction inner side end is called the bead portion 20, and the portion at which a tread 26 is disposed is called the crown portion 24.

The pneumatic tire 10 has a noise suppressing member 16. The noise suppressing member 16 is a plate-shaped member for suppressing cavity resonance, and is formed from a sheet-shaped resin for example, and is fixed to a tire inner surface 10A. The material of the tire inner surface 10A is, for example, rubber or resin.

At least a portion of an annular space SA that is formed within the pneumatic tire 10 is in a state of being partitioned by the noise suppressing member 16. The noise suppressing member 16 is not a member for absorbing cavity resonance that is temporarily generated, and is a member for making it such that cavity resonance itself is not generated.

The noise suppressing member 16 has mounting portions 16A that are plate-shaped and that are fixed to the tire inner surface 10A, a convex portion 16B that is plate-shaped and is curved convexly toward the tire radial direction inner side from the mounting portions 16A, and bent portions 16C that are formed at the borders between the mounting portions 16A and the convex portion 16B.

For example, a pair of the mounting portions 16A are provided. The convex portion 16B is formed in an upside-down V-shape for example, and the lower ends thereof are joined to the pair of mounting portions 16A, respectively. The pair of mounting portions 16A are apart from one another in the tire circumferential direction. The noise suppressing member 16 has two of the bent portions 16C. The convex portion 16B can also be called a projecting portion, a jutting-out portion, or the like. The tire radial direction inner side end portion of the convex portion 16B is made to be, for example, a planar portion.

Plate thickness t1 of the bent portions 16C and the vicinities thereof is set to be thicker than plate thickness t2 of another region of the noise suppressing member 16. Here, the another region is, for example, a planar portion 16D that is an example of the radial direction inner side end portion (peak portion) of the convex portion 16B. Namely, the plate thickness t1 is set to be thicker than the plate thickness t2 of the planar portion 16D (t1 > t2). The vicinity of the bent portion 16C is, for example, the mounting portion 16A that extends from the bent portion 16C, and, of a vertical wall portion 16B1 of the convex portion 16B, the portion thereof that extends from the bent portion 16C.

The mounting portion 16A has the uniform plate thickness t1. On the other hand, plate thickness t of the vertical wall portion 16B1 at the convex portion 16B gradually decreases from tire radial direction inner side end 16E of the region that is plate thickness t1, until a region of arriving at the planar portion 16D. The plate thickness t2 of the planar portion 16D is thinner than the plate thicknesses of all of the regions of the vertical wall portion 16B1. Note that, of the vertical wall portion 16B1, the plate thickness thereof in the vicinity of the planar portion 16D may be made to be equal to the plate thickness t2 of the planar portion 16D.

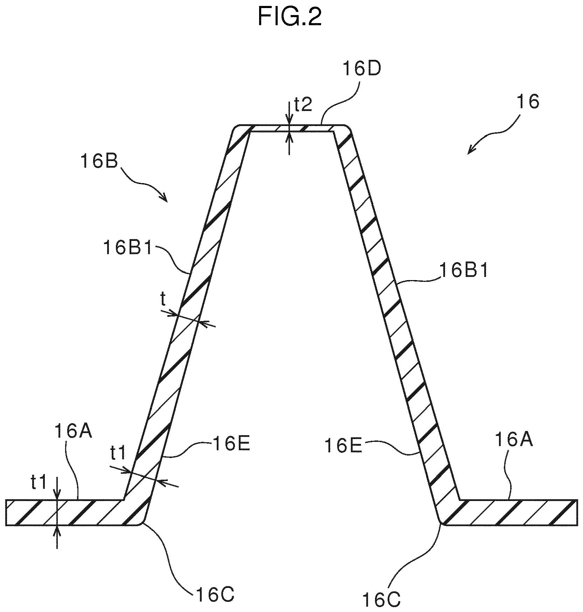

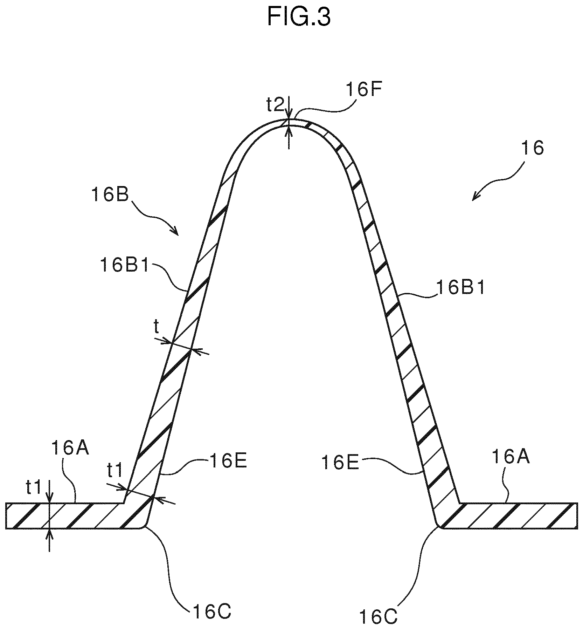

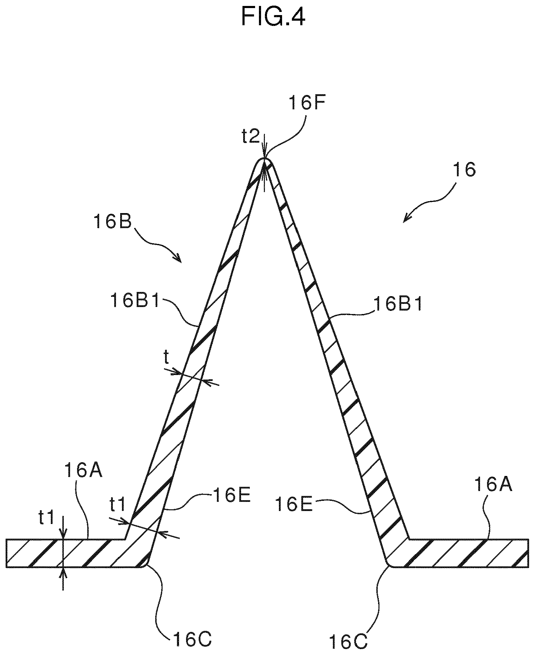

The resin that structures the noise suppressing member 16 is a thermoplastic resin for example. Accordingly, the noise suppressing member 16 can be manufactured by a resin such as PET (polyethylene terephthalate) or the like for example being blow molded. The noise suppressing member 16 can also be manufactured by press molding a resin. In the case of carrying out press molding, of the resin plate that is the material of the noise suppressing member 16, the portions that become the bent portions 16C and the vicinities thereof are nipped by press molds, and the portion that becomes the tire radial direction inner side end (the planar portion 16D in Fig. 2, and a peak portion 16F in Fig. 3 and Fig. 4) of the convex portion 16B is pushed into a female mold by a male mold, and press molding is carried out. Due thereto, the plate thickness t2 of the tire radial direction inner side end of the convex portion 16B naturally becomes thinner than the plate thickness t1 of the bent portions 16C and vicinities thereof.

Maximum height dimension H of the noise suppressing member 16 in the tire radial direction is preferably greater than or equal to 50% of the tire sectional height SH. The maximum height dimension H is the height in the state in which the noise suppressing member 16 is fixed to the tire inner surface. This is because, if the maximum height dimension H is smaller than 0.5SH, the effect of suppressing cavity resonance decreases.

The structure of the noise suppressing member 16 is not limited to this, and may be the structures that are shown in Fig. 3 and Fig. 4 for example. In modified example 1 that is shown in Fig. 3, the peak portion 16F that is an example of the tire radial direction inner side end portion of the convex portion 16B is formed by a curved surface that is convex toward the tire radial direction inner side. In the example shown in Fig. 4, the convex portion 16B is formed in an upside-down V-shape, and the peak portion 16F that is an example of the tire radial direction inner side end portion is pointed sharp as compared with the peak portion 16F of modified example 1 of Fig. 3. In other words, the radius of curvature of the peak portion 16F is smaller than the radius of curvature of the peak portion 16F in modified example 1 of Fig. 3.

### (Operation)

The present embodiment is structured as described above, and the operation thereof is described hereinafter. In Fig. 1, in the pneumatic tire 10 relating to the present embodiment, there is a state in which at least a portion of the annular space SA that is formed within the tire is partitioned by the noise suppressing member 16 that is fixed to the tire inner surface 10A. Due thereto, the generation of cavity resonance can be inhibited.

At the noise suppressing member 16, the bent portions 16C are formed at the borders of the mounting portions 16A and the convex portion 16B that are respectively plate-shaped, and the plate thickness t1 of the bent portions 16C and the vicinities thereof is set to be thicker than the plate thickness t2 of another region at the noise suppressing member 16. Due thereto, the second moment of area of the bent portions 16C and the vicinities thereof increases. Accordingly, the noise suppressing member 16 deforming at the bent portions 16C in a direction of collapsing, due to generated heat of the tire at the time of traveling and centrifugal force that is applied to the noise suppressing member 16, is suppressed. Further, at the noise suppressing member 16, the plate thickness t2 of regions where reinforcement is not needed, e.g., the planar portion 16D in Fig. 2 and the peak portion 16F in Fig. 3 and Fig. 4, can be reduced.

Further, the plate thickness t2 of the tire radial direction inner side end portion of the convex portion 16B, e.g., the planar portion 16D in Fig. 2 and the peak portion 16F in Fig. 3 and Fig. 4, is made to be thinner than the plate thickness t1 of the bent portions 16C and the vicinities thereof. Therefore, the centrifugal force that is applied to this end portion at the time of traveling is suppressed. Thus, the noise suppressing member 16 deforming in a direction of collapsing can be suppressed.

In this way, in accordance with the present embodiment, deformation of the noise suppressing member 16 at the time of traveling can be suppressed, while an increase in the weight of the tire is suppressed.

### [Other Embodiments]

Although an embodiment in the present invention has been described above, embodiments in the present invention are not limited to the above, and the present invention can of course be implemented by being modified in various ways other than the above within a scope that does not depart from the gist thereof.

The disclosure of Japanese Patent Application No. 2017-86147 filed on April 25, 2017 is, in its entirety, incorporated by reference into the present specification.

All publications, patent applications, and technical standards mentioned in the present specification are incorporated by reference into the present specification to the same extent as if such individual publication, patent application, or technical standard was specifically and individually indicated to be incorporated by reference.

## Claims

1. A pneumatic tire, comprising:
a noise suppressing member that has a mounting portion that is plate-shaped and that is fixed to a tire inner surface, a convex portion that is plate-shaped and is curved convexly from the mounting portion toward an inner side in a tire radial direction, and a bent portion that is formed at a boundary between the mounting portion and the convex portion,
wherein a plate thickness of the bent portion and a vicinity thereof is thicker than a plate thickness of another region of the noise suppressing member.

2. The pneumatic tire of claim 1, wherein the other region is an end portion, at an inner side in the tire radial direction, of the convex portion.
